# EUROPÄISCHE PATENTSCHRIFT

(11) **EP 2 745 627 B1**
(45) Veröffentlichungstag und Bekanntmachung des Hinweises auf die Patenterteilung: **12.07.2017**
(21) Anmeldenummer: 13709146.8
(22) Anmeldetag: 18.02.2013
(51) Int. Cl.: H05B 33/08

(54) **LED-ANSTEUERUNG FÜR LAUFLICHT-BLINKER**
LED ACTUATION FOR RUNNING LIGHT FLASHERS
COMMANDE DE DEL POUR CHENILLARD CLIGNOTANT

(30) Priorität: 24.02.2012 AT 500412012
(43) Veröffentlichungstag der Anmeldung: 25.06.2014
(73) Patentinhaber: ZKW Group GmbH, 3250 Wieselburg (AT)
(72) Erfinder: PETSCH, Daniel, A-3292 Gaming (AT)
(74) Vertreter: Patentanwaltskanzlei Matschnig & Forsthuber OG
(86) Internationale Anmeldenummer: PCT/AT2013/050041
(87) Internationale Veröffentlichungsnummer: WO 2013/123542

(56) Entgegenhaltungen:
- EP-A2- 2 337 428
- WO-A1-2007/069124
- WO-A1-2010/046806

## Beschreibung

Die Erfindung bezieht sich auf eine Leuchtdiodenkette mit einer Mehrzahl in Serie geschalteter, von einer Stromquelle gespeister Leuchtdioden, wobei jeder Leuchtdiode eine Ansteuerschaltung zugeordnet ist, welche einen gesteuerten Schalter aufweist und die dazu eingerichtet ist, in Abhängigkeit von einer Steuerspannung an einer allen Ansteuerschaltungen gemeinsamen Steuerleitung gesteuerte Schalter zu öffnen oder zu schließen.

Lauflichtschaltungen mit LEDs sind bekannt, wobei die einzelnen LEDs je mit einer Elektrode an einer gemeinsamen Speiseleitung und mit den anderen Elektroden an Versorgungsleitungen liegen, die von einem Taktgeber angespeist werden. Dies bedeutet einen hohen Verdrahtungsaufwand, da bei einer Anzahl n von LEDs (n+1) einzelne Leitungen benötigt werden.

Eine Leuchtdiodenkette der eingangs genannten Art ist aus der WO 2010/046806 A1 bekannt geworden. Bei dieser Lösung nach dem Stand der Technik ist jedem gesteuerten Schalter ein eigener Komparator zugeordnet, wobei jedem Komparator einerseits die Steuerspannung an der gemeinsamen Steuerleitung und andererseits eine Teilspannung eines Spannungsteilers einer Referenzspannung zugeführt ist. Wenngleich hier eine Ansteuerungsleitung erforderlich ist, benötigen die einzelnen Komparatoren nicht nur eine zusätzliche Verdrahtung, sondern sie verursachen auch weitere Kosten.

Eine aus der WO 2011/096680 A2 bekannte Ansteuerungsschaltung für in Serie geschaltete Leuchtdioden betrifft lediglich eine Stromversorgung der in Serie liegenden Leuchtdioden aus einem Wechselstromnetz, wobei eine Anpassung der LED-Ströme an eine Halbwellenspannung in stromsparender Weise erfolgen soll, nicht jedoch ein gezieltes An- oder Abschalten einzelner Leuchtdioden der Serienschaltung.

Es ist eine Aufgabe der Erfindung, den Verdrahtungsaufwand für eine Leuchtdiodenkette zu verringern und eine Lösung anzubieten, die mit geringem Aufwand auch praxisgeeignet, insbesondere auch für Kfz-Anwendungen geeignet ist.

Diese Aufgabe wird mit einer Leuchtdiodenkette der eingangs genannten Art gelöst, bei welcher erfindungsgemäß jede Ansteuerschaltung eine zur Leuchtdiode parallel geschaltete Serienschaltung einer Referenzspannungssenke der Spannung mit einem gesteuerten Schalter aufweist und jede Ansteuerschaltung dazu eingerichtet ist, die gegen einen Fußpunkt der LED-Serienschaltung gemessene Steuerspannung, mit der Spannung an der Verbindung des Schalters mit der darauffolgenden LED der Kette bzw. dem Fußpunkt zu vergleichen und den Schalter zu schließen, falls die Steuerspannung unter einen vorgegebenen Wert fällt bzw. den Schalter zu öffnen, falls die Steuerspannung über einen vorgegebenen Wert steigt.

Dank der Erfindung sind unabhängig von der Anzahl der verwendeten LEDs lediglich drei Leitungen für die Leuchtdiodenkette erforderlich. Die einfache und billige Ansteuerschaltung kann auf kleinsten Raum unmittelbar bei der Leuchtdiode aufgebaut sein.

Eine praxisgemäße Variante zeichnet sich dadurch aus, dass die Ansteuerschaltung die Leuchtdiode mit der Serienschaltung der Referenzspannungssenke und der Schaltstrecke eines gesteuerten Halbleiterschalters überbrückt, wobei die Summe von Referenzspannung und Durchlassspannung des Halbleiterschalters kleiner als die Flussspannung der Leuchtdiode ist, und eine allen Leuchtdioden gemeinsame Steuerleitung vorgesehen ist, die an dem Ausgang eines eine Spannungsrampe erzeugenden Rampengenerators liegt und mit den Steuereingängen sämtlicher Halbleiterschalter verbunden ist.

Bei einer zweckmäßigen Ausführung ist die Referenzspannungssenke von zumindest einer Referenzspannungsdiode gebildet, wobei mit Vorteil die Referenzspannungsdiode eine Zenerdiode ist.

Bei einer praxisnahen Variante ist vorgesehen, dass die Halbleiterschalter (Q1) Transistoren, insbesondere MOSFETs sind.

Um vor allem MOSFETs vor einer ungewollt hohen Gate-Source Spannung zu schützen, ist es zweckmäßig, wenn die Steuerstrecke des Halbleiterschalters von einer Schutzdiode überbrückt ist, wobei diese mit Vorteil eine Zenerdiode ist.

Um sicherzustellen, dass der Halbleiterschalter verlässlich ausschaltet, kann vorgesehen sein, dass parallel zur Schutzdiode ein Widerstand geschaltet ist.

Im Sinne eines Schutzes des Halbleiterschalters vor zu hohen Spannungen in Verbindung mit der Schutzdiode ist es von Vorteil, wenn zwischen dem Steuereingang des Halbleiterschalters und der Steuerleitung ein Schutzwiderstand liegt.

Falls zwischen der Steuerleitung und den Steuereingängen der Halbleiterschalter je eine Trenndiode geschaltet ist, werden Rückwirkungen der Ansteuerelektronik über die Steuerleitung vermieden.

Wenngleich prinzipiell beliebige Rampenformen möglich sind, ist es auch im Sinne einer definierbaren Dimensionierung sinnvoll, wenn der Rampengenerator zur Erzeugung einer linear steigenden/fallenden Spannungsrampe eingerichtet ist.

Die Erfindung samt weiteren vorteilen ist im Folgenden an Hand beispielsweiser Ausführungen näher erläutert, die in der Zeichnung veranschaulicht sind. In dieser zeigen
Fig. 1 in einem Blockschaltbild den prinzipiellen Aufbau einer Leuchtdiodenkette nach der Erfindung,
Fig. 2 das Schaltbild einer Ansteuerschaltung einer Leuchtdiode einer Leuchtdiodenkette,
Fig. 3 bis 7 verschiedene Betriebsstadien einer beispielsweisen Leuchtdiodenkette mit vier Leuchtdioden,
Fig. 8 in einem Diagramm den zeitlichen Verlauf einer fallenden Steuerspannung sowie der Anzahl der je leuchtenden Leuchtdioden einer Kette mit vier Leuchtdioden,
Fig. 9 ein Diagramm wie Fig. 8, jedoch mit steigender Steuerspannung und
Fig. 10 in einem Diagramm den zeitlichen Verlauf einer fallenden Steuerspannung sowie den Anstieg der Helligkeit der Leuchtdioden.

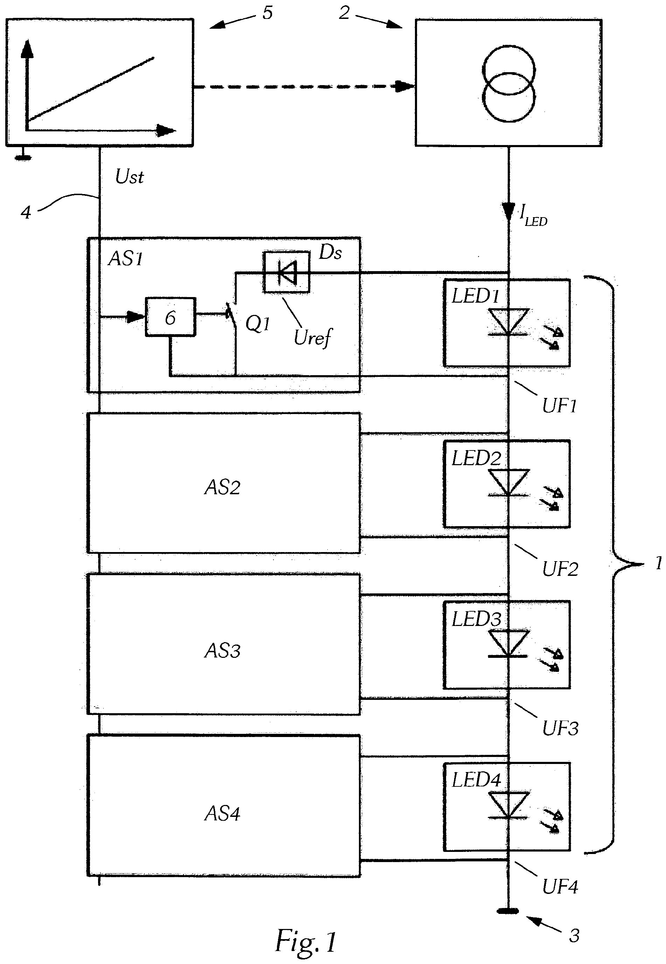

Fig. 1 zeigt den Aufbau einer Leuchtdiodenkette 1 nach der Erfindung: Eine Stromquelle 2 liefert einen Strom I_{LED} und speist bei diesem Beispiel vier in Serie geschaltete Leuchtdioden LED1 bis LED4 gegen einen Fuß- oder Massepunkt 3. Bei den Leuchtdioden LED1...LED4 der Leuchtdiodenkette muss es sich nicht notwendigerweise um eine einzelne Leuchtdiode handeln, es können an Stelle einer Leuchtdiode auch Serien- und/ oder Parallelschaltungen von Leuchtdioden vorgesehen sein. Eine strichliert eingezeichnete Leitung zwischen dem Rampengenerator 5 und der Stromquelle 2 soll andeuten, dass gegebenenfalls eine zusätzliche Steuerung des Stroms ILED erfolgen kann.

Jeder Leuchtdiode LED1 ... LED4 ist eine Ansteuerschaltung AS1 bis AS4 zugeordnet, welche eine zur zugehörigen Leuchtdiode parallel geschaltete Serienschaltung einer Referenzspannungssenke Dₛ der Spannung U_{ref} und eines gesteuerten Schalters Q aufweist.

Eine allen Ansteuerschaltungen AS1 bis AS4 gemeinsame Steuerleitung 4 liegt an dem Ausgang eines Rampengenerators 5 und ist über eine hier symbolisch eingezeichnete Vergleichsschaltung 6 der Ansteuerschaltungen mit den Steuereingängen der gesteuerten Schalter verbunden. Dabei ist jede Ansteuerschaltung dazu eingerichtet, eine Steuerspannung Uₛₜ, die an der Steuerleitung 4, gemessen gegen einen Fußpunkt 3 liegt, mit der Spannung UF1 bis UF4 an der Verbindung des Schalters Q mit der darauffolgenden Leuchtdiode LD2 der Kette bzw. dem Fußpunkt 3 zu vergleichen und den Schalter Q zu schließen, falls die Steuerspannung Uₛₜ unter einen vorgegebenen Wert fällt bzw. den Schalter Q zu öffnen, falls die Steuerspannung über einen vorgegebenen Wert ansteigt.

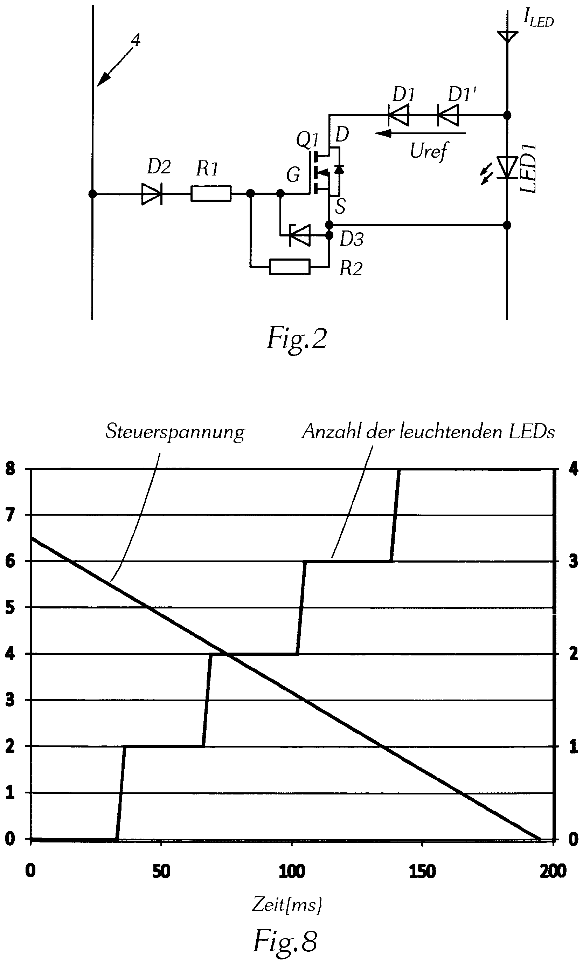

Da sämtliche Ansteuerschaltungen identisch ausgebildet sind, soll nachstehend unter Bezugnahme auf Fig. 2 ein praxiserprobtes Ausführungsbeispiel einer Ansteuerschaltung im Detail beschrieben werden, welche der ersten Leuchtdiode LED1 der Kette zugeordnet sein möge.

Parallel zur Leuchtdiode LED1 liegt die Serienschaltung zweier in Durchlassrichtung geschalteter Dioden, welche insgesamt mit D1 bezeichnet sind und eine Referenzspannungssenke bilden, mit der Schaltstrecke D-S eines MOSFETs Q, dessen Source S an der Katode der Leuchtdiode LED1 und dessen Drain D an der Katode der Diode(n) D1 liegt. Das Gate des Transistors Q liegt über die Serienschaltung eines Schutzwiderstandes R1 und einer Trenndiode D2 an der Steuerleitung 4. Source S und Gate G des MOSFETs Q sind einerseits von einer Zenerdiode D3 und andererseits von einem Widerstand R2 überbrückt.

Die Trenndiode D2 verhindert Rückwirkungen auf die jeweils übrigen Schaltungen der Leuchtdiodenkette 1 und der Schutzwiderstand R1 verhindert in Kombination mit der Zenerdiode D3 schädlich hohe Spannungen an der Gate-Source-Strecke des MOSFET. Der Widerstand R2 stellt sicher, dass der MOSFET-Schalter trotz des Vorhandenseins der Diode D2 ausgeschaltet werden kann. Der Diode D1 kommt überdies die Aufgabe zu, die unvermeidbaren Gate-Source Spannungstoleranzen des MOSFETs Q1 auszugleichen und den Umstand zu berücksichtigen, dass ein FET keinen exakten Schaltpunkt besitzt.

Die nachstehend gegebenen Spannungswerte sollen lediglich zur besseren Erläuterung der Funktion der Erfindung dienen und hängen von den je verwendeten Bauteilen und der Schaltungsdimensionierung ab. Im gezeigten Ausführungsbeispiel sind die beiden, die Referenzspannungsdiode D1 bildenden Dioden beispielsweise Schottky-Dioden mit einer typischen Flussspannung von je 0,6 Volt, sodass die Referenzspannung U_{ref} der Referenzspannungssenke D1 bei Nennstrom der Leuchtdioden 1,2 Volt beträgt. Die Zenerspannung der Zenerdiode D3 beträgt 8,2 Volt, die Durchlassspannung der Diode D2 0,6 Volt. Der MOSFET Q wird typisch ab einer Gate-Source-Spannung von 2 Volt leitend. Die Durchlassspannung der Leuchtdioden beträgt typisch 2 Volt.

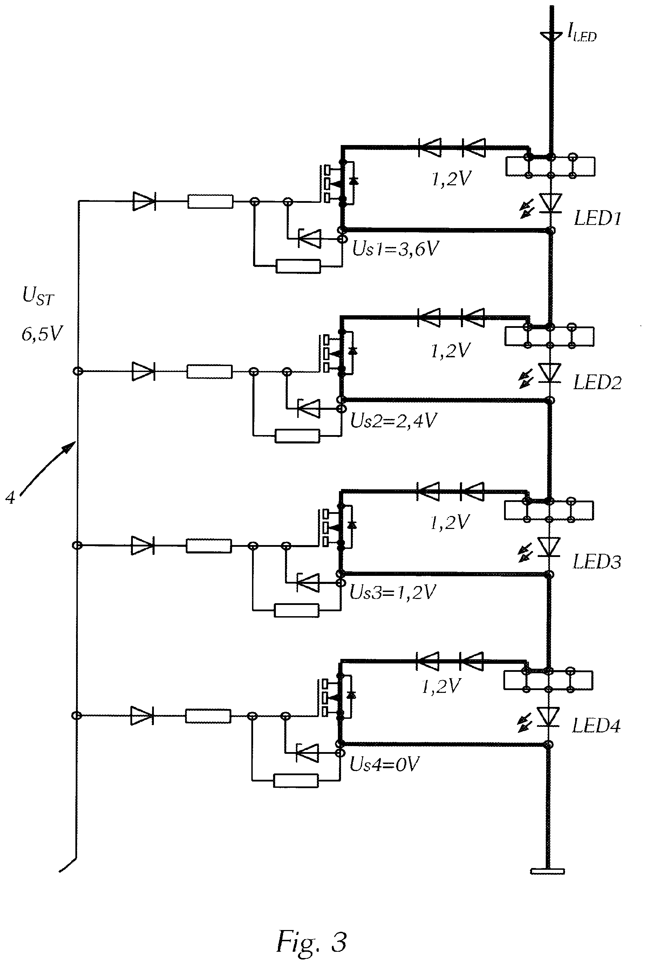

Unter weiterer Bezugnahme auf die Fig. 3 bis 7 sei nun die Funktion einer vierstufigen Leuchtdiodenkette erläutert, wobei es für den Fachmann klar ist, dass die Erfindung keineswegs auf eine bestimmte Anzahl von Leuchtdioden beschränkt ist und bei entsprechender Dimensionierung mehr oder weniger als vier Stufen vorgesehen sein können.

In einer ersten Phase nach Fig. 3 betrage die Steuerspannung Uₛₜ 6,5 Volt. Die Spannung an der Verbindung der Schalter Q mit der darauffolgenden LED der Kette bzw. dem Fußpunkt beträgt Uₛ₁ = 3,6 Volt, Uₛ₂ = 2,4 Volt, Uₛ₃ = 1,2 Volt bzw. Uₛ₄ = 0 Volt. Die Gate-Source-Spannung jedes MOSSFETs ist größer als 2 Volt, nämlich 2,3 Volt, 3,5 Volt, 4,7 Volt und 5,9 Volt für die erste bis vierte Stufe, daher sind sämtliche MOSFETs Q durchgesteuert und ihre Drain-Source-Spannung liegt annähernd bei 0 Volt. An den Leuchtdioden LED1 bis LED4 liegt je eine Spannung von 1,2 Volt, im Wesentlichen entsprechend der Referenzspannung U_{Ref}. Diese Spannung liegt deutlich unterhalb der Durchlassspannung der Leuchtdioden von 2 Volt, es leuchtet keine Leuchtdiode. In dem Diagramm der Fig. 8 entspricht dies dem Ausgangspunkt der fallenden Spannungsrampe.

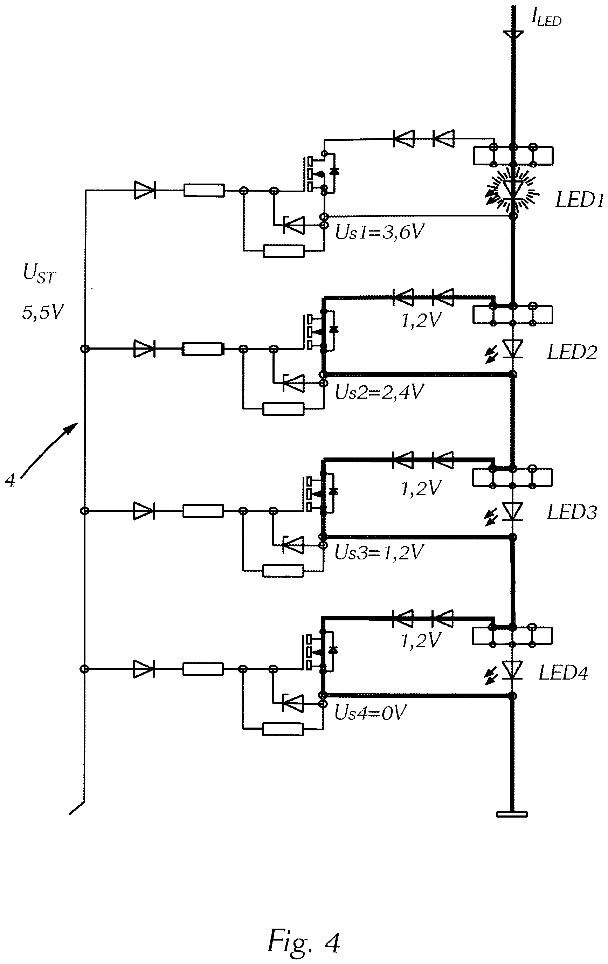

In Fig. 4 ist die Steuerspannung Uₛₜ auf 5,5 Volt abgesunken, die Gate-Source-Spannung des MOSFETs der ersten Stufe nur noch 1,3 Volt, der Schalter Q der ersten Stufe sperrt und die erste Leuchtdiode LED1 leuchtet.

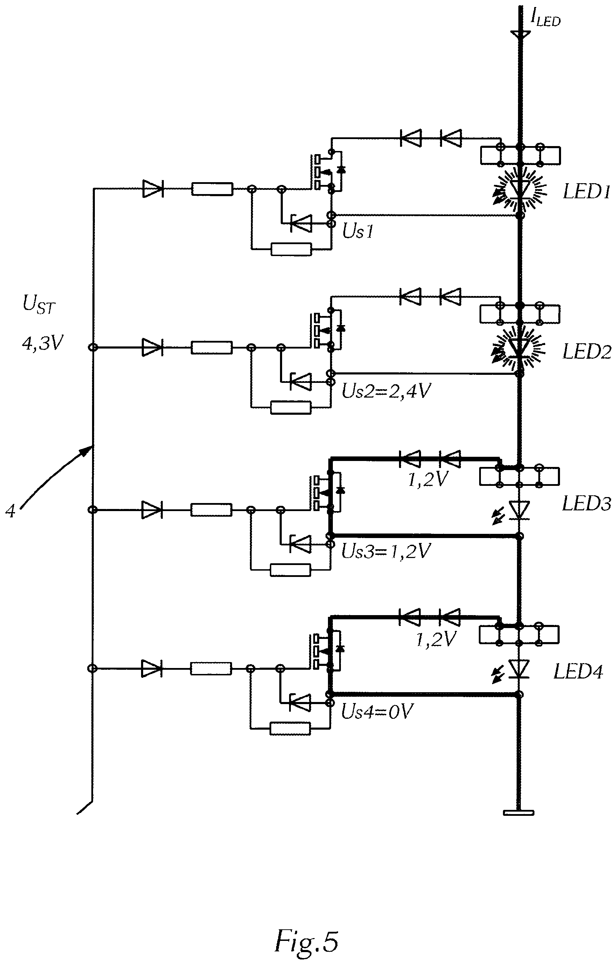

In Fig. 5 ist die Steuerspannung Uₛₜ auf 4,3 Volt abgesunken, die Gate-Source-Spannung des MOSFETs der ersten Stufe beträgt nur noch 0,1 Volt, jene des MOSFETs der zweiten Stufe nur noch 1,3 Volt, daher sperrt auch der Schalter Q der zweiten Stufe und die zweite Leuchtdiode LED1 leuchtet ebenso wie die erste Leuchtdiode LED 2.

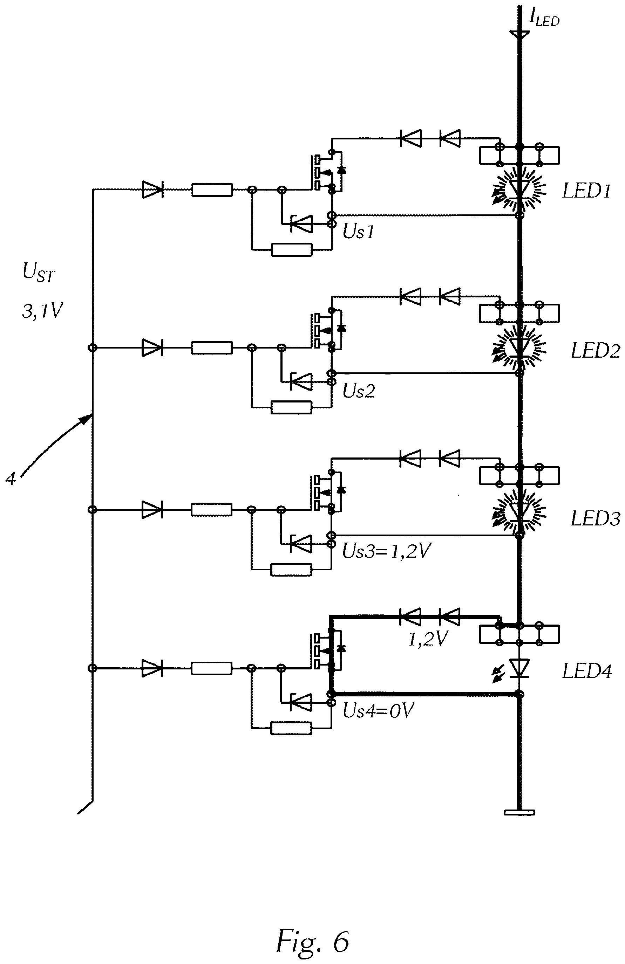

In Fig. 6 ist die Steuerspannung Uₛₜ auf 3,1 Volt abgesunken, die Gate-Source-Spannung des MOSFETs der ersten Stufe beträgt 0 Volt, jene des MOSFETs der zweiten Stufe nur noch 0,1 Volt und jene des MOSFETs der dritten Stufe nur noch 1,3 Volt, daher sperrt nun auch der Schalter Q der dritten Stufe und die dritte Leuchtdiode LED3 leuchtet ebenso wie die erste und zweite Leuchtdiode LED 1 und LED 2.

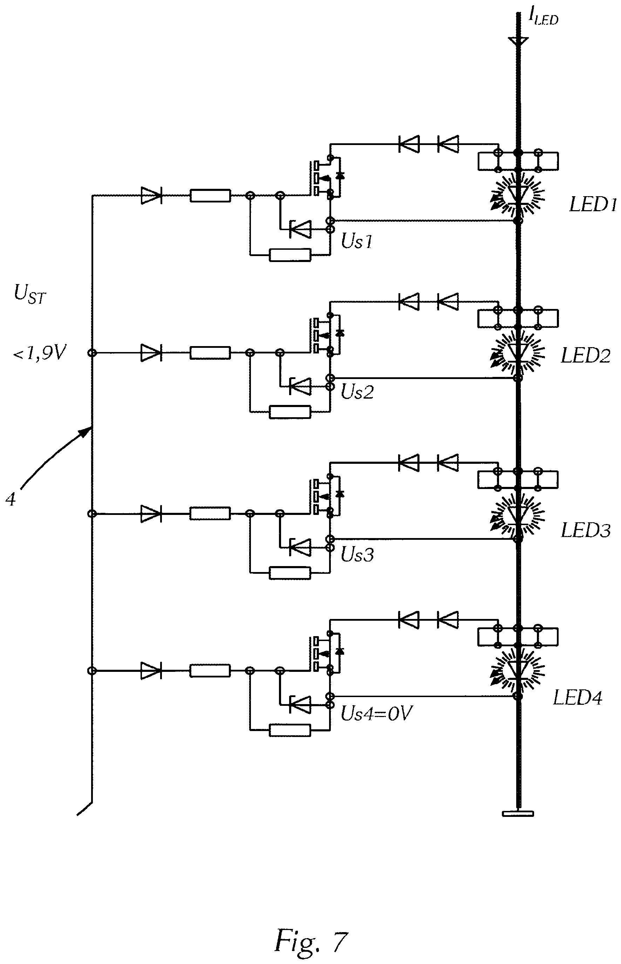

In der Phase, die in Fig. 7 gezeigt ist, leuchten sämtliche Leuchtdioden LED1 bis LED4, da bei einer Steuerspannung Uₛₜ von unter 1,9 Volt die Gate-Source-Spannungen an den MOSFETs der einzelnen Stufen (in der Zeichnung von oben nach unten) nun 0 Volt, 0 Volt, 0 Volt und 1,3 Volt betragen.

Für die Sourcespannungen Uₛ₁ in Fig. 5, 6 und 7, Uₛ₂ in Fig. 6 und 7 sowie Uₛ₃ in Fig. 7 sind keine konkreten Spannungswerte in die Zeichnung eingetragen, da diese Spannungen von den Flussspannungen der vorgehenden LEDs bestimmt sind, die typen- bzw. leistungsabhängig sind.

Insgesamt führt die beschrieben Funktionsweise bei einer beispielsweise linear fallenden, von dem Rampengenerator 5 erzeugten Steuerspannung U_{St} dazu, dass ein laufender, die Leuchtdiodenkette "anfüllender" Lichteindruck entsteht. Dazu sei nochmals auf Fig. 8 verwiesen, welche diese Funktionsweise für einen Zeitabschnitt von 200 ms demonstriert. Wie bereits erwähnt, kann der Verlauf der Steuerspannung auch anderen beliebigen Funktionen an Stelle einer linearen Funktion folgen.

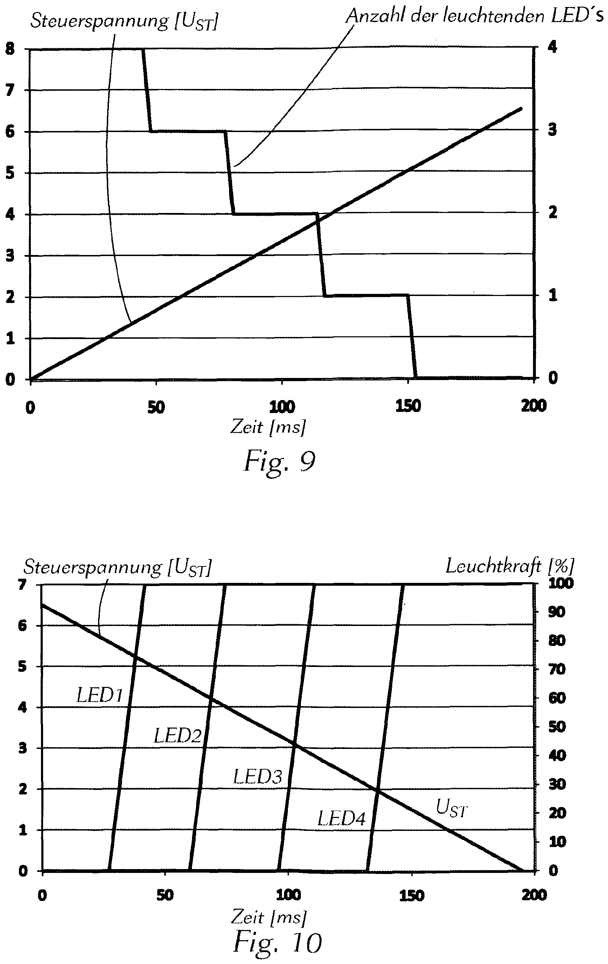

Fig. 9 zeigt den zu Fig. 8 gegenteiligen Verlauf bei steigender Steuerspannung. Im Betrieb sind sämtliche Kombinationen und Abwandlungen möglich, z.B. ein sägezahnförmiger oder dreieckförmiger Verlauf der Steuerspannung mit entsprechenden Lichteffekten der Leuchtdiodenkette.

Schließlich soll Fig. 10 noch bei fallender Steuerspannung U_{St} die Abhängigkeit der Leuchtkraft der vier, im Beispiel verwendeten Leuchtdioden illustrieren.

Nicht im Detail dargestellt ist die bereits oben angedeutete Möglichkeit, in gewissem Ausmaß die Stromquelle 2 durch den Rampengenerator 5 zu steuern, sodass noch weitere Effekte erzielbar sind, z.B. eine beim "Auffüllen" der Kette ansteigende Helligkeit der Leuchtdioden.

## Patentansprüche

1. Leuchtdiodenkette mit einer Mehrzahl in Serie geschalteter, von einer Stromquelle (2) gespeister Leuchtdioden (LED1 ... LED4), wobei jeder Leuchtdiode eine Ansteuerschaltung (AS1 ... AS4) zugeordnet ist, welche einen gesteuerten Schalter (Q1 ... Q4) aufweist und die dazu eingerichtet ist, in Abhängigkeit von einer Steuerspannung (Uₛₜ) an einer allen Ansteuerschaltungen gemeinsamen Steuerleitung (4) gesteuerte Schalter zu öffnen oder zu schließen,
**dadurch gekennzeichnet, dass**
jede Ansteuerschaltung (AS1 ... AS4) eine zur Leuchtdiode (LED 1 ... LED4) parallel geschaltete Serienschaltung einer Referenzspannungssenke (D1, D1') mit einer Referenzspannung (U_{ref}) mit einem gesteuerten Schalter (Q1) aufweist und jede Ansteuerschaltung dazu eingerichtet ist, die gegen einen Fußpunkt der LED-Serienschaltung gemessene Steuerspannung (Uₛₜ), mit der Spannung (UF1 ... UF4) an der Verbindung des Schalters mit der darauffolgenden LED der Kette bzw. dem Fußpunkt zu vergleichen und den Schalter zu schließen, falls die Steuerspannung (Uₛₜ) unter einen vorgegebenen Wert fällt bzw. den Schalter zu öffnen, falls die Steuerspannung über einen vorgegebenen Wert steigt.

2. Leuchtdiodenkette nach Anspruch 1, **dadurch gekennzeichnet, dass** die Ansteuerschaltung (AS1 ... AS4) die Leuchtdiode (LED1 ... LED4) mit der Serienschaltung der Referenzspannungssenke (D1) und der Schaltstrecke eines gesteuerten Halbleiterschalters (Q) überbrückt, wobei die Summe von Referenzspannung (U_{ref}) und Durchlassspannung (U_{D}) des Halbleiterschalters kleiner als die Flussspannung der Leuchtdiode (LED1) ist, und die gemeinsame Steuerleitung (4) an dem Ausgang eines eine Spannungsrampe erzeugenden Rampengenerators (5) liegt und mit den Steuereingängen sämtlicher Halbleiterschalter verbunden ist.

3. Leuchtdiodenkette nach Anspruch 1 oder 2, **dadurch gekennzeichnet, dass** die Referenzspannungssenke (D1, D1') von zumindest einer Referenzspannungsdiode gebildet ist.

4. Leuchtdiodenkette nach Anspruch 3, **dadurch gekennzeichnet, dass** die Referenzspannungsdiode (D1) eine Zenerdiode ist.

5. Leuchtdiodenkette nach einem der Ansprüche 1 bis 4, **dadurch gekennzeichnet, dass** die Halbleiterschalter (Q) Transistoren sind.

6. Leuchtdiodenkette nach Anspruch 5, **dadurch gekennzeichnet, dass** die Halbleiterschalter MOSFETs sind.

7. Leuchtdiodenkette nach einem der Ansprüche 1 bis 6, **dadurch gekennzeichnet, dass** die Steuerstrecke (G-S) des Halbleiterschalters (Q) von einer Schutzdiode (D3) überbrückt ist.

8. Leuchtdiodenkette nach Anspruch 7, **dadurch gekennzeichnet, dass** die Schutzdiode (D3) eine Zenerdiode ist.

9. Leuchtdiodenkette nach Anspruch 7 oder 8, **dadurch gekennzeichnet, dass** parallel zur Schutzdiode (D3) ein Widerstand (R2) geschaltet ist.

10. Leuchtdiodenkette nach einem der Ansprüche 1 bis 9, **dadurch gekennzeichnet, dass** zwischen dem Steuereingang des Halbleiterschalters (Q) und der Steuerleitung ein Schutzwiderstand (R1) liegt.

11. Leuchtdiodenkette nach einem der Ansprüche 1 bis 10, **dadurch gekennzeichnet, dass** zwischen der Steuerleitung (4) und den Steuereingängen der Halbleiterschalter (Q) je eine Trenndiode (D2) geschaltet ist.

12. Leuchtdiodenkette nach einem der Ansprüche 1 bis 11, **dadurch gekennzeichnet, dass** der Rampengenerator (5) zur Erzeugung einer linear steigenden/fallenden Spannungsrampe eingerichtet ist.

## Claims

1. A light-emitting diode chain, comprising a plurality of light-emitting diodes (LED1 ... LED4) connected in series and fed by a current source (2), wherein each light-emitting diode is assigned a control circuit (AS1 ... AS4), which comprises a controlled switch (Q1 ... Q4) and which is designed to open or to close a switch controlled according to a control voltage (Uₛₜ) on a control line (4) common to all control circuits,
**characterised in that**
each control circuit (AS1 ... AS4) comprises a series connection, connected in parallel with the light-emitting diode (LED 1 ... LED4), of a reference voltage sink (D1, D1') with a reference voltage (U_{ref}) and of a controlled switch (Q1) and each control circuit is designed to compare the control voltage (Uₛₜ), measured against a base point of the LED series circuit, with the voltage (UF1 ... UF4) at the connection between the switch and the subsequent LED in the chain or the base point, and to close the switch if the control voltage (Uₛₜ) falls below a predefined value and to open the switch if the control voltage rises above a predefined value.

2. A light-emitting diode chain according to Claim 1, **characterised in that** the control circuit (AS1 ... AS4) bridges the light-emitting diode (LED1 ... LED4) with the series circuit of the reference voltage sink (D1) and the contact-break path of a controlled semiconductor switch (Q), wherein the sum of reference voltage (U_{ref}) and forward voltage (U_{D}) of the semiconductor switch is smaller than the forward voltage of the light-emitting diode (LED1), and the common control line (4) lies at the output of a ramp generator (5) generating a voltage ramp and is connected to the control inputs of all semiconductor switches.

3. The light-emitting diode chain according to Claim 1 or 2, **characterised in that** the reference voltage sink (D1, D1') is formed by at least one reference voltage diode.

4. The light-emitting diode chain according to Claim 3, **characterised in that** the reference voltage diode (D1) is a Zener diode.

5. The light-emitting diode chain according to one of Claims 1 to 4, **characterised in that** the semiconductor switches (Q) are transistors.

6. The light-emitting diode chain according to Claim 5, **characterised in that** the semiconductor switches are MOSFETs.

7. The light-emitting diode chain according to one of Claims 1 to 6, **characterised in that** the control path (G-S) of the semiconductor switch (Q) is bridged by a protective diode (D3).

8. The light-emitting diode chain according to Claim 7, **characterised in that** the protective diode (D3) is a Zener diode.

9. The light-emitting diode chain according to Claim 7 or 8, **characterised in that** a resistor (R2) is connected in parallel with the protective diode (D3).

10. The light-emitting diode chain according to one of Claims 1 to 9, **characterised in that** a protective resistor (R1) is arranged between the control input of the semiconductor switch (Q) and the control line.

11. The light-emitting diode chain according to one of Claims 1 to 10, **characterised in that** an isolation diode (D2) is connected between the control line (4) and the control inputs of each semiconductor switch (Q).

12. The light-emitting diode chain according to one of Claims 1 to 11, **characterised in that** the ramp generator (5) is designed to generate a linearly rising/falling voltage ramp.

## Revendications

1. Chaîne de diodes électroluminescentes ayant une pluralité de diodes électroluminescentes (LED1... LED4), montées en série, alimentées par une source de courant (2), à chaque diode électroluminescente étant associé un circuit de commande (AS1... AS4), lequel présente un commutateur commandé (Q1... Q4) et qui est configuré pour ouvrir ou fermer des commutateurs commandés en fonction d'une tension de commande (U_{ST}) sur une ligne de commande (4) commune à tous les circuits de commande,
**caractérisée par le fait que**
chaque circuit de commande (AS1... AS4) présente un montage en série, monté en parallèle de la diode électroluminescente (LED1... LED4), d'un puits de tension de référence (D1, D1') avec une tension de référence (U_{REF}) sur un commutateur commandé (Q1), et chaque circuit de commande est configuré pour comparer la tension de commande (U_{ST}) , mesurée en un point de base du montage en série des LED, avec la tension (UF1... UF4) sur la liaison du commutateur avec la LED suivante de la chaîne ou le point de base et pour fermer le commutateur si la tension de commande (U_{ST}) chute au-dessous d'une valeur prédéfinie ou pour ouvrir le commutateur si la tension de commande s'élève au-dessus d'une valeur prédéfinie.

2. Chaîne de diodes électroluminescentes selon la revendication 1, **caractérisée par le fait que** le circuit de commande (AS1... AS4) ponte la diode électroluminescente (LED1... LED4) avec le montage en série du puits de tension de référence (D1) et le trajet de commutation d'un commutateur à semi-conducteurs commandé (Q), la somme de la tension de référence (U_{REF}) et de la tension passante (U_{D}) du commutateur à semi-conducteurs étant inférieure à la tension directe de la diode électroluminescente (LED1), et la ligne de commande commune (4) se situant sur la sortie d'un générateur de rampe (5) générant une rampe de tension et étant reliée aux entrées de commande de tous les commutateurs à semi-conducteurs.

3. Chaîne de diodes électroluminescentes selon l'une des revendications 1 ou 2, **caractérisée par le fait que** le puits de tension de référence (D1, D1') est formé par au moins une diode de tension de référence.

4. Chaîne de diodes électroluminescentes selon la revendication 3, **caractérisée par le fait que** la diode de tension de référence (D1) est une diode Zener.

5. Chaîne de diodes électroluminescentes selon l'une des revendications 1 à 4, **caractérisée par le fait que** les commutateurs à semi-conducteurs (Q) sont des transistors.

6. Chaîne de diodes électroluminescentes selon la revendication 5, **caractérisée par le fait que** les commutateurs à semi-conducteurs sont des MOSFET.

7. Chaîne de diodes électroluminescentes selon l'une des revendications 1 à 6, **caractérisée par le fait que** le trajet de commande (U-S) du commutateur à semi-conducteurs (Q) est ponté par une diode de protection (D3).

8. Chaîne de diodes électroluminescentes selon la revendication 7, **caractérisée par le fait que** la diode de protection (D3) est une diode Zener.

9. Chaîne de diodes électroluminescentes selon l'une des revendications 7 ou 8, **caractérisée par le fait qu'**une résistance (R2) est montée en parallèle de la diode de protection (D3).

10. Chaîne de diodes électroluminescentes selon l'une des revendications 1 à 9, **caractérisée par le fait qu'**une résistance de protection (R1) se situe entre l'entrée de commande du commutateur à semi-conducteurs (Q) et la ligne de commande.

11. Chaîne de diodes électroluminescentes selon l'une des revendications 1 à 10, **caractérisée par le fait qu'**une diode d'isolement (D2) est montée à chaque fois entre la ligne de commande (4) et des entrées de commande des commutateurs à semi-conducteurs (Q).

12. Chaîne de diodes électroluminescentes selon l'une des revendications 1 à 11, **caractérisée par le fait que** le générateur de rampe (5) est configuré pour générer une rampe de tension montant/descendant de façon linéaire.
